# EUROPÄISCHE PATENTSCHRIFT

(11) **EP 2 289 960 B1**
(45) Veröffentlichungstag und Bekanntmachung des Hinweises auf die Patenterteilung: **22.08.2012**
(21) Anmeldenummer: 10166434.0
(22) Anmeldetag: 18.06.2010
(51) Int. Cl.: C08G 18/18, C08G 18/24, C08G 18/48, C08G 18/76

(54) **Verwendung von Metallsalzen einer Carbonsäure bei der Herstellung von Polyurethansystemen**
Use of metallic salts of a carboxylic acid in the production of polyurethane systems
Utilisation de sels métalliques d'un acide carbonique lors de la fabrication de systèmes en polyuréthane

(30) Priorität: 18.07.2009 DE 102009033710
(43) Veröffentlichungstag der Anmeldung: 02.03.2011
(60) Teilanmeldung: 12172115.3
(73) Patentinhaber: Evonik Goldschmidt GmbH, 45127 Essen (DE)
(72) Erfinder: Schmitz, Sarah, 45130, Essen (DE); Hubel, Roland, 45136, Essen (DE)

(56) Entgegenhaltungen:
- EP-A2- 1 013 704
- WO-A1-2008/116605
- US-A- 3 245 958
- US-A- 4 584 362

## Beschreibung

Die Erfindung betrifft die Verwendung von Metallsalzen von Carbonsäuren, insbesondere der 3,5,5-Trimetylhexansäure und n-Octansäure und deren Lösungen bei der Herstellung von Polyurethansystemen (PUR-Systeme).

Polyurethansysteme sind z. B. Polyurethanbeschichtungen, Polyurethanadhäsive, Polyurethandichtmittel, Polyurethanelastomere oder Polyurethanschäume/ -schaumstoffe.

Polyurethanschaumstoffe finden aufgrund ihrer hervorragenden mechanischen und physikalischen Eigenschaften in den verschiedensten Bereichen Verwendung. Einen besonders wichtigen Markt für verschiedenste Typen von PUR-Schäumen, wie konventionelle Weichschäume auf Ether- und Esterpolyolbasis, Kaltschäume (häufig auch als HR-Schäume bezeichnet), Hartschäume, Integralschäume und mikrozellulare Schäume, sowie Schäume deren Eigenschaften zwischen diesen Klassifizierungen liegen, wie z. B. halbharte Systeme, stellt die Automobil- und die Möbelindustrie dar. Es werden z. B. Hartschäume als Dachhimmel, Esterschäume zur Innenverkleidung der Türen sowie für ausgestanzte Sonnenblenden, Kalt- und Weichschäume für Sitzsysteme und Matratzen verwendet.

**Für ei**nkomponentige feuchtigkeitsreaktive Polyurethanzusammensetzungen geeignete Katalysatoren enthalten meist Zinnverbindungen, wie Zinncarboxylate, insbesondere Zinnoctoat (entspricht Zinn-2-Ethylhexanoat), vielfach kombiniert mit tertiären Aminen.

So wird die Verwendung von Zinnoctoat bei der Herstellung von PUR-Weichschäumen auf der Basis von Polyetherolen beispielsweise in Steve Lee, Huntsman Polyurethanes, The Polyurethanes Book, Verlag Wiley, S. 140, 143-144 und Ron Herrington, Flexible Polyurethane Foams, Dow Chemical, S. 2.30 beschrieben. Das Zinnoctoat dient als Katalysator der Reaktion von Isocyanaten mit Polyolen (auch als Gelkatalysator bezeichnet) über einen komplexen Übergangszustand. Während der Herstellung des Schaumes hydrolysiert das Zinnoctoat und setzt sowohl das Salz der 2-Ethylhexansäure, als auch die Säure an sich, frei. Die Zersetzung ist zwar erwünscht, weil auf diese Weise die Rückreaktion der Urethanbindung zu den Edukten unterbunden ist, sollte nach Möglichkeit jedoch nicht zur Freisetzung eventuell toxikologisch bedenklicher Substanzen führen. Auch in der Patentliteratur sind zahlreiche Anmeldungen zu finden, die die Verwendung von besagtem Zinnoctoat beschreiben, so z. B. in BE 779607, GB 1432281, GB 1422056, GB 1382538, GB 1012653, GB 982280 genannt. In diesen Schriften werden als bevorzugte Katalysatorsysteme solche eingesetzt, die Zinnoctoat aufweisen.

Solche Zinn-Katalysatoren geraten jedoch in neuerer Zeit seitens der Anwender immer mehr unter Druck aufgrund toxikologischer Bedenken bezüglich der zu ihrer Herstellung verwendeten Edukte, insbesondere der Liganden. Daher besteht ein zunehmender Bedarf an toxikologisch unbedenklicheren Alternativen.

Zur Erfüllung der sich in den letzten Jahren deutlich verschärfenden Anforderungen an die Automobil- und Möbelindustrie und deren Schaumstoffzulieferer bezüglich Emissions- und Toxizitätsspezifikationen wurden bereits Katalysatorsysteme entwickelt, die weniger toxische, in den Schaum einpolymerisierbare Liganden enthalten. Solche Systeme werden beispielsweise in EP 1013704 beschrieben. Der Nachteil dieser Systeme besteht in deren hohen Einsatzmengen und den damit verbundenen Kosten aufgrund des niedrigen Zinngehalts und der starken Abschirmung des aktiven Zinns durch die Liganden. Diese Systeme stellten bis dato eine der wenigen Alternativen zu dem weitverbreiteten Zinnoctoat-Katalysatorsystem (Zinn(II)-Salz der 2-Ethylhexansäure) bzw. Organozinnverbindungen, wie Dibutylzinndilaurat dar. Letztgenannte Systeme sind im Hinblick auf die Toxizität der emittierenden Substanzen kritisch zu betrachten. Die beispielsweise während und nach der Verschäumung freiwerdende 2-Ethylhexansäure gibt wegen möglicher fruchtschädigender (entwicklungsschädigender) Wirkungen beim Menschen (R 63) Anlass zur Besorgnis.

Eine weitere Alternative zu den herkömmlichen Zinnkatalysatoren stellen Bismut-Katalysatoren dar. Als Bismut-Katalysatoren für Polyurethanzusammensetzungen bekannt sind beispielsweise Bismutcarboxylate, z.B. Bismut-Octoat (Bismutsalz der 2-Ethylhexansäure), wie in WO 98/36007 erwähnt. Allerdings ist die katalytische Aktivität von Bismut-Verbindungen in Bezug auf die Isocyanat-Wasser-Reaktion deutlich geringer als jene von Zinn-Katalysatoren und die Emission an 2-Ethylhexansäure stellt auch bei diesem Katalysatorsystem ein Problem dar.

Ein weiterer Nachteil der angesprochenen Katalysatorsysteme liegt in ihrem sehr schmalen Verarbeitungsspiel. Es wurde beobachtet, dass bei entsprechenden Katalysatorsystemen ein geringfügig zu höheren Einsatzmengen variiertes Katalysatorsystem zu sehr geschlossenzelligen Schäumen bzw. starkem Schrumpf führt.

Aufgabe der vorliegenden Erfindung war deshalb die Bereitstellung eines Katalysatorsystems, welches einen oder mehrere der vorgenannten Nachteile nicht aufweist.

Überraschenderweise wurde nun gefunden, dass Katalysatorsysteme gemäß Anspruch 1 diese Aufgabe lösen.

Gegenstand der vorliegenden Erfindung sind deshalb Katalysatorsysteme, geeignet zur Katalyse der Herstellung von Polyurethansystemen, welche dadurch gekennzeichnet sind, dass das Katalysatorsystem ein Zinnsalz einer Carbonsäure, an deren Carbonyl-Kohlenstoffatom ein Kohlenwasserstoffrest gebunden ist, der so ausgewählt ist, dass die Carbonsäure von 8 bis 13 Kohlenstoffatome aufweist, mit der Maßgabe, dass die Carbonsäure nicht ausschließlich eine einzelne Ethyl- oder n-Propylverzweigung in 2-Position aufweist (d.h., die Carbonsäure muss neben der Ethyl- oder n-Propylverzweigung in 2-Position noch mindestens eine weitere Verzweigungen in der Alkylkette in einer beliebigen Position, wie z.B. Methylverzweigungen, aufweisen oder linear sein), und der Maßgabe, dass als weitere Katalysatoren nur solche eingesetzt werden, die keine Zinnverbindungen, insbesondere kein Dibutylzinndilaurat enthalten, enthalten. Ebenfalls Gegenstand der vorliegenden Erfindung ist die Verwendung solcher Katalysatorsysteme bei der Herstellung von Polyurethansystemen sowie entsprechende Polyurethansysteme, insbesondere Polyurethanschäume und deren Verwendung.

Das erfindungsgemäße Katalysatorsystem hat den Vorteil, dass es sowohl zur Herstellung von flexiblen Schäumen auf Basis von Ether- und Esterpolyolen als auch von Hartschäumen sowie Schäumen, deren Eigenschaften zwischen diesen Klassifizierungen liegen, wie z.B. halbharte Schäume, geeignet ist.

Durch die Verwendung des erfindungsgemäßen Katalysatorsystems können Polyurethansysteme unter Verwendung toxikologisch unbedenklicher Edukte hergestellt werden, die auch unter thermischen Extrembedingungen keine toxikologisch bedenklichen Spaltprodukte emittieren. Die erfindungsgemäßen Katalysatorsysteme haben außerdem den Vorteil, dass bei der PU-Schaum Herstellung ein breiteres Verarbeitungsspiel zur Verfügung steht. Diese Vorteile lassen sich erzielen, ohne dass sich die sonstigen physikalischen Eigenschaften, wie z.B. Dichte, Härte, Rückprallelastizität oder Stauchhärte, ändern bzw. signifikant verschlechtern. Die Stauchhärte kann durch die Verwendung des erfindungsgemäßen Katalysatorsystems sogar verbessert werden.

Das erfindungsgemäße Katalysatorsystem, welches zur Katalyse der Herstellung von Polyurethanschäumen geeignet ist, zeichnet sich dadurch aus, dass es ein Zinnsalz einer Carbonsäure, an deren Carbonyl-Kohlenstoffatom ein Kohlenwasserstoffrest gebunden ist, der so ausgewählt ist, dass die Carbonsäure von 8 bis 13 Kohlenstoffatome aufweist, mit der Maßgabe, dass die Carbonsäure nicht ausschließlich eine einzelne Ethyl- oder n-Propylverzweigung in 2-Position aufweist, und der Maßgabe, dass als weitere Katalysatoren nur solche eingesetzt werden, die keine Zinnverbindungen, insbesondere kein Dibutylzinndilaurat enthalten, enthält. Vorzugsweise ist der Kohlenwasserstoffrest so ausgewählt, dass die Säure mindestens ein, vorzugsweise von 6 bis 17, bevorzugt von 8 bis 13 Kohlenstoffatome aufweist. Der Kohlenwasserstoffrest kann gesättigt oder ungesättigt, vorzugsweise gesättigt sein. Bevorzugt sind solche Säuren enthalten, die keine Verzweigung, oder mindestens eine Methylgruppenverzweigung oder einen Cycloalkylrest aufweisen. Unter Methylgruppenverzweigungen wird dabei verstanden, dass es sich um eine Alkylcarbonsäure handelt, deren Alkylrest verzweigt ist und der eine oder mehrere Methylgruppen aufweist. Bevorzugte Katalysatorsysteme sind solche, die keine Carbonsäuren oder deren Salze aufweisen, die eine einzelne Ethyl- oder n-Propylverzweigungen aufweisen, wie z. B. Ethylhexansäure. Vorzugsweise weist das Katalysatorsystem als Zinnsale ausschließlich solche auf, die Salze von Carbonsäuren sind, die unverzweigt sind oder ausschließlich Methylverzweigungen aufweisen.

Erfindungsgemäß bevorzugte Katalysatorsysteme, die zumindest ein Zinnsalz einer Methylgruppen-aufweisenden Carbonsäure enthalten, weisen ein oder mehrere Metallsalze ausgewählt aus den Salzen der n-Octansäure, n-Nonansäure oder 3,5,5-Trimethylhexansäure (Isononansäure) auf.

Das Katalysatorsystem kann ausschließlich die Zinnsalze aufweisen oder die Zinnsalze in Kombination mit einem Lösungsmittel, wie z. B. Wasser oder einem oder mehreren organischen Lösungsmitteln. Bevorzugt wird das Zinnsalz einzeln (ungelöst eingesetzt). Wird das Zinnsalz gelöst bzw. in Kombination mit einem Lösungsmittel eingesetzt, enthält das Katalysatorsystem vorzugsweise ein organisches aprotisches Lösungsmittel. Enthält das Katalysatorsystem ein organisches Lösungsmittel, so ist dieses vorzugsweise ausgewählt aus Polyolen, Estern, Polyestern, Olefinen, Phthalaten, endverkappten Polyethern oder Mineralölen. Wird das Zinnsalz gelöst oder in Kombination mit einem Lösungsmittel eingesetzt, beträgt das Massenverhältnis von Metallsalz zu Lösungsmittel vorzugsweise von 100 zu 1 bis 1 zu 2, bevorzugt von 50 zu 1 bis 1 zu 1 und besonders bevorzugt von 25 zu 1 bis 2 zu 1.

Neben dem/den Zinnsalz(en) und einem oder mehreren Lösungsmitteln kann das Katalysatorsystem weitere Komponenten, wie z. B. ein oder mehrere tertiäre Amine, ein oder mehrere Silikonstabilisatoren und gegebenenfalls ein oder mehrere Emulgatoren aufweisen. Bevorzugt liegt es jedoch separat oder gelöst vor.

Das erfindungsgemäße Katalysatorsystem kann insbesondere zur Herstellung von Polyurethanbeschichtungen, Polyurethanadhäsiven, Polyurethandichtmitteln, Polyurethanelastomeren oder Polyurethanschäume/ -schaumstoffen, bevorzugt zur Herstellung von Polyurethanschäumen eingesetzt werden. Das erfindungsgemäße Katalysatorsystem wird dabei der Reaktionsmischung vorzugsweise vor oder während der Reaktion zugegeben, bevorzugt mit Hilfe eines Mischkopfes zudosiert.

Wie beschrieben kann das Katalysatorsystem weitere Bestandteile, wie z. B. Wasser, tertiäres Amin, Silikonstabilisator und gegebenenfalls Emulgator, aufweisen. Eine solche Lösung des Katalysators wird häufig als Aktivatorlösung bezeichnet. Bevorzugt wird das Katalysatorsystem jedoch separat zugegeben.

In dem erfindungsgemäßen Verfahren ist die direkte Zudosierung eines Katalysatorsystems, welches ausschließlich das bzw. die Zinnsalze aufweist, bevorzugt. Ist dies nicht möglich, weil das Zinnsalz eine zu hohe Viskosität aufweist oder ein Feststoff ist, werden die Zinnsalze in Form einer Lösung direkt zudosiert. Zinnisononat und Zinn-n-octoat (Salz der n-Octansäure) haben dabei den Vorteil, dass Konzentrationsschwankungen nicht in einer Schaumstörung resultieren. Die direkte Dosierung des viskosen Zinnoctoats (Salz der 2-Ethylhexansäure) in die Polyurethansystemkomponenten, insbesondere Verschäumungskomponenten hingegen kann aufgrund der nur geringen benötigten Mengen und der starken Beeinflussung dieses Katalysators auf die Gelreaktion zu Problemen führen. Da viele Verschäumer nur über eine direkte Dosierung verfügen, ist ein Produkt, welches geringeren Schwankungen unterliegt, von großem Vorteil.

Alternativ zur direkten Verschäumung kann das Katalysatorsystem auch in verdünnter Form zudosiert werden. Dabei sind wasserfreie Lösungen vorzuziehen, da einige Übergangsmetallsalze nur bedingt hydrolysestabil sind.

Die erfindungsgemäßen Katalysatorsysteme sind als Katalysatoren in den üblichen Formulierungen zur Herstellung von Polyurethansystemen, insbesondere Polyurethanschäumen/- schaumstoffen, bestehend aus einem oder mehreren organischen Isocyanaten mit zwei oder mehr Isocyanat-Funktionen, einem oder mehreren Polyolen mit zwei oder mehr gegenüber Isocyanat reaktiven Gruppen, ggf. weiteren Katalysatoren für die Reaktionen Isocyanat-Polyol und/oder Isocyanat-Wasser und/oder die Isocyanat-Trimerisierung, Wasser, optional physikalischen Treibmitteln, optional Flammschutzmitteln und ggf. weiteren Additiven, einsetzbar.

Geeignete Isocyanate im Sinne dieser Erfindung sind vorzugsweise alle mehrfunktionalen organischen Isocyanate, wie beispielsweise 4,4'-Diphenylmethandiisocyanat (MDI), Toluoldiisocyanat (TDI), Hexamethylendiisocyanat (HMDI) und Isophorondiisocyanat (IPDI). Besonders geeignet ist das als "polymeres MDI" ("crude MDI") bekannte Gemisch aus MDI und höher kondensierten Analogen mit einer mittleren Funktionalität von 2 bis 4, sowie die verschiedenen Isomere des TDI in reiner Form oder als Isomerengemisch.

Geeignete Polyole im Sinne dieser Erfindung sind vorzugsweise alle organischen Substanzen mit mehreren gegenüber Isocyanaten reaktiven Gruppen, sowie deren Zubereitungen. Bevorzugte Polyole sind alle zur Herstellung von Polyurethansystemen, insbesondere Polyurethanschaumstoffen üblicherweise verwendeten Polyetherpolyole und Polyesterpolyole. Polyetherpolyole werden durch Umsetzung von mehrwertigen Alkoholen oder Aminen mit Alkylenoxiden gewonnen. Polyesterpolyole basieren auf Estern mehrwertiger Carbonsäuren (die entweder aliphatisch, beispielsweise Adipinsäure, oder aromatisch, beispielsweise Phthalsäure oder Terephthalsäure, sein können) mit mehrwertigen Alkoholen (meist Glycolen). Zudem können auf natürlichen Ölen basierende Polyether (natural oil based polyols, NOPs) eingesetzt werden. Diese Polyole werden aus natürlichen Ölen wie z.B. Soja- oder Palmöl gewonnen und können unmodifiziert oder modifiziert verwendet werden.

Ein geeignetes Verhältnis von Isocyanat und Polyol, ausgedrückt als Index der Formulierung, liegt im Bereich von 10 bis 1000, bevorzugt 40 bis 350. Dieser Index beschreibt das Verhältnis von tatsächlich eingesetztem Isocyanat zu (für eine stöchiometrische Umsetzung mit Polyol) berechnetem Isocyanat. Ein Index von 100 steht für ein molares Verhältnis der reaktiven Gruppen von 1 zu 1.

Geeignete weitere Katalysatoren im Sinne dieser Erfindung sind Substanzen, die die Gelreaktion (Isocyanat-Polyol), die Treibreaktion (Isocyanat-Wasser) oder die Di- bzw. Trimerisierung des Isocyanats katalysieren. Typische Beispiele sind Amine, wie z.B. Triethylamin, Dimethylcyclohexylamin, Tetramethylethylendiamin, Tetramethylhexandiamin, Pentamethyldiethylentriamin, Pentamethyldipropylentriamin, Triethylendiamin, Dimethylpiperazin, 1,2-Dimethylimidazol, N-Ethylmorpholin, Tris(dimethylaminopropyl)hexahydro-1,3,5-triazin, Dimethylaminoethanol, Dimethylaminoethoxyethanol und Bis(dimethylaminoethyl)ether und Kaliumsalze wie Kaliumacetat. Als weitere Katalysatoren werden solche eingesetzt, die keine Zinnverbindungen, insbesondere kein Dibutylzinndilaurat enthalten.

Geeignete Einsatzmengen richten sich nach dem Typ des Katalysators und liegen üblicherweise im Bereich von 0,01 bis 5 pphp (= Gewichtsteilen bezogen auf 100 Gewichtsteile Polyol) bzw. 0,1 bis 10 pphp für Kaliumsalze.

Geeignete Wasser-Gehalte im Sinne dieser Erfindung hängen davon ab, ob zusätzlich zum Wasser noch physikalische Treibmittel eingesetzt werden oder nicht. Bei rein Wasser-getriebenen Schäumen liegen die Werte typischerweise bei 1 bis 20 pphp, werden zusätzlich andere Treibmittel eingesetzt, verringert sich die Einsatzmenge auf üblicherweise 0 oder 0,1 bis 5 pphp. Zur Erlangung hoher Schaumraumgewichte werden weder Wasser noch andere Treibmittel eingesetzt.

Geeignete physikalische Treibmittel im Sinne dieser Erfindung sind Gase, beispielsweise verflüssigtes CO₂, und leichtflüchtige Flüssigkeiten, beispielsweise Kohlenwasserstoffe mit 4 oder 5 Kohlenstoff-Atomen, bevorzugt cyclo-, iso- und n-Pentan, Fluorkohlenwasserstoffe, bevorzugt HFC 245fa, HFC 134a und HFC 365mfc, Fluorchlorkohlenwasserstoffe, bevorzugt HCFC 141b, Sauerstoffhaltige Verbindungen wie Methylformiat und Dimethoxymethan, oder Chlorkohlenwasserstoffe, bevorzugt Dichlormethan und 1,2-Dichlorethan. Des Weiteren eignen sich Ketone (z.B. Aceton) oder Aldehyde (z.B. Methylal) als Treibmittel.

Neben Wasser und ggf. physikalischen Treibmitteln, können auch andere chemische Treibmittel eingesetzt werden, die mit Isocyanaten unter Gasentwicklung reagieren, wie beispielsweise Ameisensäure oder Carbonate.

Geeignete Flammschutzmittel im Sinne dieser Erfindung sind bevorzugt flüssige organische Phosphorverbindungen, wie halogenfreie organische Phosphate, z.B. Triethylphosphat (TEP), halogenierte Phosphate, z.B. Tris(1-chlor-2-propyl)phosphat (TCPP) und Tris(2-chlorethyl)phosphat (TCEP) und organische Phosphonate, z.B. Dimethylmethanphosphonat (DMMP), Dimethylpropanphosphonat (DMPP), oder Feststoffe wie Ammoniumpolyphosphat (APP) und roter Phosphor. Des Weiteren sind als Flammschutzmittel halogenierte Verbindungen, beispielsweise halogenierte Polyole, sowie Feststoffe wie Blähgraphit und Melamin geeignet.

Die Verarbeitung der Formulierungen zu Schaumstoffen kann nach allen dem Fachmann geläufigen Verfahren erfolgen, beispielsweise im Handmischverfahren oder bevorzugt mit Hilfe von Hochdruck-Verschäumungsmaschinen. Dabei können diskontinuierliche Verfahren, beispielsweise zur Produktion von Formschäumen, Kühlschränken und Paneelen, oder kontinuierliche Verfahren, beispielsweise bei Dämmplatten, Metallverbundelementen, Blöcken oder bei Sprühverfahren zum Einsatz kommen.

Durch das erfindungsgemäße Verfahren können Polyurethansysteme, insbesondere Polyurethanschäume erhalten werden, die sich dadurch auszeichnen, dass sie zumindest Zinnsalze von einer oder mehrere Carbonsäuren, an deren Carbonyl-Kohlenstoffatom ein Kohlenwasserstoffrest gebunden ist, mit der Maßgabe, dass die Carbonsäure keine einzelne Ethyl- oder n-Propylgruppe in 2-Position aufweist, insbesondre die oben beschriebenen Carbonsäuren/-salze, aufweisen. Vorzugsweise weisen die erfindungsgemäßen Polyurethansysteme, bevorzugt Polyurethanschäume, ausschließlich solche Salze von Carbonsäuren auf, die ausschließlich unverzweigt sind oder Methylgruppen-Verzweigungen aufweisen.

Bevorzugte erfindungsgemäße Polyurethansysteme, insbesondere Polyurethanschäume zeichnen sich dadurch aus, dass der Massenanteil an Carbonsäuren, bzw. Carboxylaten, an deren Carbonyl-Kohlenstoffatom ein Kohlenwasserstoffrest gebunden ist, mit der Maßgabe, dass die Carbonsäure keine einzelne Ethyl- oder n-Propylverzweigung in 2-Position aufweist, von 0,001 bis 5 Massen-%, bezogen auf das Gewicht des gesamten Schaums, vorzugsweise von 0,01 bis 1,5 Massen-% beträgt.

Die erfindungsgemäßen Polyurethansysteme können z. B. Polyurethanbeschichtungen, Polyurethanadhäsive, Polyurethandichtmittel, Polyurethanelastomere oder Polyurethanschäume, insbesondere ein Polyurethanweichschaum, ein Polyurethanhartschaum, ein viscoelastischer Schaum, ein HR-Schaum, ein halbharter Polyurethanschaum, ein thermoverformbarer Polyurethanschaum oder ein Integralschaum sein. Die Bezeichnung Polyurethan ist hierbei als Oberbegriff für ein aus Di- bzw. Polyisocyanaten und Polyolen oder anderen gegenüber Isocyanat reaktiven Spezies, wie z.B. Aminen, hergestelltes Polymer zu verstehen, wobei die Urethan-Bindung nicht ausschließlicher oder überwiegender Bindungstyp sein muss. Auch Polyisocyanurate und Polyharnstoffe sind ausdrücklich mit eingeschlossen.

Die erfindungsgemäßen Polyurethansysteme, insbesondere die Polyurethanschäume können z. B. als Kühlschrankisolierung, Dämmplatte, Sandwichelement, Rohrisolation, Sprühschaum, 1- & 1,5-Komponenten-Dosenschaum, Holzimitat, Modellschaum, Verpackungsschaum, Matratzen, Möbelpolster, Automobil-Sitzpolster, Kopfstütze, Instrumententafel, Automobil-Innenverkleidung, Automobil-Dachhimmel, Schallabsorptionsmaterial, Lenkrad, Schuhsole, Teppichrückseitenschaum, Filterschaum, Dichtschaum, Dichtmittel und Kleber verwendet werden.

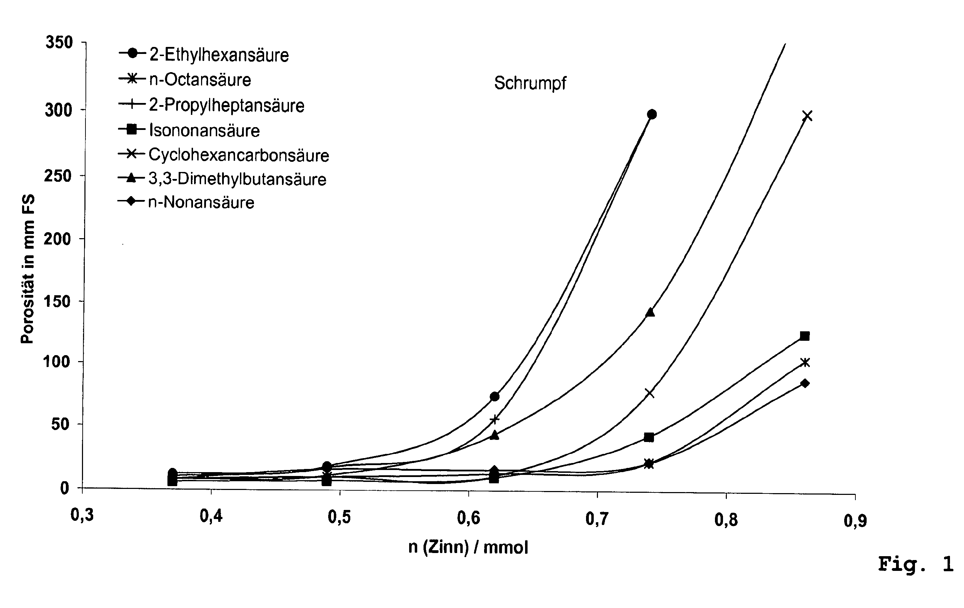

Die vorliegende Erfindung wird an Hand der Abbildung Fig. 1 näher erläutert, ohne dass der Gegenstand der Anmeldung darauf beschränkt sein soll.

Fig. 1 zeigt eine Graphik mit den Ergebnissen des Beispiels 36, bei der auf der X-Achse die Stoffmenge an Zinn im jeweiligen Katalysatorsystem in mmol und auf der Y-Achse die Porosität in mm Flüssigkeitssäule (FS) der erhaltenen Schäume angegeben ist.

In den nachfolgend aufgeführten Beispielen wird die vorliegende Erfindung beispielhaft beschrieben, ohne dass die Erfindung, deren Anwendungsbreite sich aus der gesamten Beschreibung und den Ansprüchen ergibt, auf die in den Beispielen genannten Ausführungsformen beschränkt sein soll.

### Beispiele

### Beispiele 1 bis 35: Herstellung von Polyurethanschäumen

Zur Herstellung der Polyurethanschäume wurde folgende Rezeptur verwendet: 100 Gew.-Teile Polyetherol (Hydroxylzahl = 47 mg KOH/g, 11-12 % EO), 4 Gew.-Teile Wasser, 1 Gew.-Teil TEGOSTAB® BF 2370 (Silikonstabilisator der Evonik Goldschmidt GmbH), 0,1 Gew.-Teile eines tertiären Amins, 50,6 Gew.-Teile Toluoldiisocyanat T 80 (Index 110), sowie eine variable Menge an KOSMOS® 29 (Zinnoctoat, Evonik Goldschmidt GmbH) bzw. der zu untersuchenden Zinncarboxylate. Als nichterfindungsgemäße Verbindungen wurden mit 2-Ethylhexansäure, 2-Ethylbuttersäure und 2-Propylheptansäure, dem Zinnisononat (Zinnsalz der 3,5,5-Trimethylhexansäure) möglichst strukturverwandte Moleküle zum Vergleich ausgewählt.

Bei der Verschäumung wurden 400 g Polyol eingesetzt, die anderen Formulierungsbestandteile wurden entsprechend umgerechnet. In Tabelle 1 sind die variablen Bestandteile der Rezepturen der Beispielschäume 1 bis 35 zusammengefasst.

Zur Verschäumung wurden das Polyol, Wasser, Amin, Zinnkatalysator und Silikonstabilisator unter Rühren gut vermischt. Nach Zugabe des Isocyanats wurde mit einem Rührer 7 Sek. bei 3000 U / min gerührt. Das erhaltene Gemisch wurde in einen mit Papier ausgekleideten Holzkasten (Grundfläche 27 cm x 27 cm) gegossen. Es entstand ein Schaumstoff, der den nachfolgend beschriebenen anwendungstechnischen Tests unterzogen wurde.

**Tabelle 1: Variable Bestandteile der Rezepturen der Beispielschäume 1 bis 35.**

| Beispiel Nr. | erfindungsgemäß | Salz^{[1]} | Katalysator [Gew.-Teile] |
|---|---|---|---|
| 1 | Nein | a) | 0,15 |
| 2 | Nein | a) | 0,20 |
| 3 | Nein | a) | 0,25 |
| 4 | Nein | a) | 0,30 |
| 5 | Nein | a) | 0,35 |
| 6 | Nein | b) | 0,17 |
| 7 | Nein | b) | 0,23 |
| 8 | Nein | b) | 0,285 |
| 9 | Nein | b) | 0,34 |
| 10 | Nein | b) | 0,40 |
| 11 | Ja | c) | 0,16 |
| 12 | Ja | c) | 0,215 |
| 13 | Ja | c) | 0,27 |
| 14 | Ja | c) | 0,33 |
| 15 | Ja | c) | 0,38 |
| 16 | Ja | d) | 0,30 |
| 17 | Ja | d) | 0,40 |
| 18 | Ja | d) | 0,50 |
| 19 | Ja | d) | 0,60 |
| 20 | Ja | d) | 0,70 |
| 21 | Ja | e) | 0,137 |
| 22 | Ja | e) | 0,18 |
| 23 | Ja | e) | 0,228 |
| 24 | Ja | e) | 0,274 |
| 25 | Ja | e) | 0,32 |
| 26 | Ja | f) | 0,128 |
| 27 | Ja | f) | 0,17 |
| 28 | Ja | f) | 0,213 |
| 29 | Ja | f) | 0,256 |
| 30 | Ja | f) | 0,299 |
| 31 | Ja | g) | 0,16 |
| 32 | Ja | g) | 0,21 |
| 33 | Ja | g) | 0,267 |
| 34 | Ja | g) | 0,32 |
| 35 | Ja | g) | 0,374 |

| | | | |
|---|---|---|---|
| ^{[1]} a) = Zinn (II)-Salz der 2-Ethylhexansäure b) = Zinn (II)-Salz der 2-Propylheptansäure c) = Zinn (II)-Salz der Isononansäure d) = Zinn (II)-Salz der n-Octansäure (50 gew.-%ig abgemischt in DPG) e) = Zinn (II)-Salz der Cyclohexancarbonsäure f) = Zinn (II)-Salz der 3,3-Dimethylbutansäure g) = Zinn (II)-Salz der n-Nonansäure | | | |

### Physikalische Eigenschaften der Schäume

Die hergestellten Schäume wurden anhand folgender physikalischer Eigenschaften beurteilt:
a) Rücksacken des Schaumstoffes nach dem Ende der Steigphase (= Rückfall) :
   Der Rückfall, bzw. das Nachsteigen ergibt sich aus der Differenz der Schaumhöhe nach direktem Abblasen und nach 3 min. nach Abblasen des Schaums. Die Schaumhöhe wird dabei durch eine an einem Zentimetermaß befestigte Nadel auf dem Maximum in der Mitte der Schaumkuppe gemessen.
b) Schaumhöhe:
   Die Endhöhe des Schaumes wird dadurch bestimmt, dass der Rückfall bzw. das Nachsteigen von bzw. zu der Schaumhöhe nach dem Abblasen subtrahiert bzw. addiert wird.
c) Raumgewicht (RG):
   Die Bestimmung erfolgt wie in ASTM D 3574 - 08 unter Test A beschrieben durch Messung der Core Density.
d) Luftdurchlässigkeit / Porosität
e) Stauchhärte CLD, 40 %
f) Druckverformungsrest bei Kompression um 90 % für 22 h bei 70 °C
g) Rückprallelastizität (Ball rebound test)

Die Tests e) bis g) wurden gemäß ASTM D 1564-71 durchgeführt.

Der Test d) wurde wie folgt durchgeführt:
Methode:
   Die Luftdurchlässigkeit / Porosität des Schaumes wurde durch eine Staudruckmessung am Schaumstoff ermittelt. Der gemessene Staudruck wurde in mm Alkoholsäule angegeben, wobei die niedrigeren Staudruckwerte den offeneren Schaum charakterisieren. Die Werte wurden im Bereich von 0 bis 300 mm gemessen.
Apparatur:
   Die Messapparatur wurde durch die hausinterne Stickstoffleitung gespeist, ist daher an diese angeschlossen und besteht aus folgenden miteinander verbundenen Teilen:
      Reduzierventil mit Manometer,
      Durchflussregelschraube,
      Waschflasche,
      Durchflussmessgerät,
      T-Stück,
      Auflagedüse,
      Skaliertes Glasrohr, mit Alkohol gefüllt

Die Waschflasche ist nur obligatorisch, wenn die Apparatur nicht aus der internen Leitung, sondern direkt mit technischem Flaschengas gespeist wird.

Das Durchflussmessgerät ist vor der ersten Inbetriebnahme gemäß den Herstellerangaben unter Verwendung der mitgelieferten Eichkurven zu kalibrieren und bei 8 L/min = 480 L/h mit einer Markierung zu versehen.

Die Auflagedüse ist spezifiziert durch eine Kantenlänge von 100 x 100 mm, ein Gewicht zwischen 800 und 1000 g, lichte Weite der Ausströmöffnung von 5 mm, lichte Weite des unteren Auflageringes von 30 mm.

Die Messflüssigkeit (techn. Alkohol (Ethanol)) kann zur Anhebung des optischen Kontrastes angefärbt werden.

Messvorgang:
Der Stickstoffvordruck wurde per Reduzierventil auf 1 bar eingestellt. Die Durchflussmenge wurde per Durchflussregelschraube auf die entsprechend 480 L/h eingeregelt. Die Flüssigkeitsmenge im skalierten Glasrohr wurde durch Alkohol auf ein Niveau gebracht, sodass keine Druckdifferenz aufgebaut und ablesbar ist. Für die eigentliche Vermessung des Prüfkörpers wurden fünf Einzelmessungen, vier an den vier Ecken und eine in der Mitte des Prüfkörpers durchgeführt. Hierzu wird an den Ecken die Auflagedüse kantenkongruent aufgelegt, die Mitte des Prüfkörpers wird geschätzt. Abgelesen wird, wenn sich ein konstanter Staudruck eingestellt hat.

### Auswertung:

Die obere Messgrenze der Methode liegt bei 300 mm Flüssigkeitssäule (FS). Für die Protokollierung sind drei verschiedene Fälle zu unterscheiden:
1. Alle fünf Werte liegen unter 300 mm FS. In diesem Fall wird das arithmetische Mittel gebildet und protokolliert.
2. Alle fünf Werte sind größer oder gleich 300 mm FS. In diesem Fall ist der Wert > 300 bzw. 300 zu protokollieren.
3. Von den fünf Messwerten sind a) Werte explizit bestimmbar, b) Werte größer oder gleich 300: es wird das arithmetische Mittel aus fünf Werten gebildet, wobei für die b)-Messwerte jeweils 300 eingesetzt wird. Die Anzahl der Werte größer oder gleich 300 wird mit Schrägstrich von dem Mittelwert getrennt ebenfalls protokolliert.

### Beispiel:

Vier Messwerte entsprechend 180, 210, 118 und 200 mm FS; ein Messwert > 300 mm FS ergibt (180 + 210 + 118 + 200 + 300) / 5. Protokolleintrag: 202/1.

Die Ergebnisse sind in Tabelle 2 zusammengefasst.

**Tabelle 2: Ergebnisse der Bestimmung der physikalischen Eigenschaften**

| Bsp. Nr. | Steigzeit [s] | Rückfall [cm] | Höhe [cm] | RG [kg/m³] | Porosität [mm] | CLD 40 % [kPa] | Druckverformung | Rückprall [cm] |
|---|---|---|---|---|---|---|---|---|
| 1 | 112 | - 0,2 | 31,8 | 24,6 | 9 | 4,5 | 6 | 39 |
| 2 | 99 | - 0,2 | 33,4 | 23,9 | 33 | 5,2 | 9 | 42 |
| 3 | 92 | + 0,5 | 34,1 | 23,2 | 201 | 5,9 | 34 | 44 |
| 4 | 84 | + 1,2 | 35,3 | 25,8 | 300 | 7,1 | 72 | 42 |
| 5 | 80 | + 1,7 | 36,2 | Schrumpf | - | - | - | - |
| 6 | 119 | + 0,1 | 30,1 | 24,9 | 10 | 4,0 | 5 | 41 |
| 7 | 104 | - 0,2 | 30,9 | 25,0 | 17 | 4,5 | 8 | 41 |
| 8 | 95 | - 0,1 | 32,0 | 24,3 | 56 | 4,9 | 12 | 44 |
| 9 | 90 | + 0,4 | 132,7 | 23,0 | 300 | 5,3 | 74 | 41 |
| 10 | 86 | + 0,8 | - | Schrumpf | - | - | - | - |
| 11 | 131 | + 0,2 | 30,4 | 24,7 | 6 | 3,6 | 5 | 43 |
| 12 | 111 | ± 0,0 | 30,6 | 24,7 | 7 | 4,0 | 5 | 42 |
| 13 | 100 | - 0,1 | 31,2 | 24,7 | 10 | 4,4 | 6 | 41 |
| 14 | 90 | ± 0,0 | 32,1 | 24,3 | 43 | 4,9 | 9 | 40 |
| 15 | 85 | + 0,3 | 32,8 | 23,6 | 126 | 5,2 | 70 | 36 |
| 16 | 126 | + 1,1 | 30,3 | 24,1 | 8 | 3,5 | 5 | 46 |
| 17 | 107 | - 0,1 | 31,1 | 24,5 | 10 | 3,8 | 4 | 44 |
| 18 | 95 | - 0,1 | 31,6 | 24,6 | 13 | 4,2 | 4 | 42 |
| 19 | 87 | - 0,1 | 32,4 | 24,3 | 22 | 4,7 | 6 | 37 |
| 20 | 80 | + 0,1 | 32,7 | 24,0 | 104 | 5,0 | 7 | 40 |
| 21 | 120 | + 0,1 | 30,6 | 24,6 | 8 | 3,6 | 4 | 43 |
| 22 | 104 | - 0,1 | 31,1 | 24,6 | 10 | 4,0 | 5 | 42 |
| 23 | 92 | - 0,2 | 31,8 | 24,6 | 11 | 4,6 | 6 | 42 |
| 24 | 85 | ± 0,0 | 32,6 | 24,0 | 78 | 5,1 | 9 | 42 |
| 25 | 82 | + 0,6 | 33,5 | 22,8 | 300 | 5,6 | 81 | 46 |
| 26 | 111 | ± 0,0 | 30,8 | 24,7 | 8 | 3,9 | 4 | 43 |
| 27 | 95 | - 0,2 | 31,8 | 24,7 | 11 | 4,3 | 5 | 42 |
| 28 | 86 | - 0,2 | 32,7 | 24,2 | 44 | 4,8 | 7 | 32 |
| 29 | 79 | + 0,2 | 33,6 | 23,3 | 145 | 5,2 | 61 | 41 |
| 30 | 80 | + 0,6 | - | Schrumpf | - | - | - | - |
| 31 | 131 | + 0,2 | 31,0 | 26,1 | 8 | 2,9 | 6 | 43 |
| 32 | 115 | + 1,3 | 31,2 | 23,4 | 16 | 2,8 | 6 | 41 |
| 33 | 100 | - 0,1 | 31,4 | 24,3 | 16 | 3,2 | 6 | 41 |
| 34 | 88 | - 0,2 | 31,8 | 24,4 | 22 | 3,4 | 8 | 41 |
| 35 | 77 | + 0,1 | 32,4 | 23,9 | 87 | 3,8 | 25 | 37 |

Wie aus den geringen Rückfällen zu erkennen ist, lassen sich bei Zugabe der erfindungsgemäßen Metallsalze der (Methyl)-Alkylcarbonsäuren stabile Polyurethanschäume herstellen. Die Gewichtsteile der jeweiligen Katalysatoren wurden so berechnet, dass der Zinngehalt bei den zu vergleichenden Systemen äquimolar ist. Die Offenzelligkeit der Schaumstoffe verringert sich bei Steigerung der Einsatzmenge von z.B. Zinnisononat lediglich von 6 auf 126 mm Staudruck Ethanolsäule, bei n-Octansäure lediglich von 8 auf 104 mm. Im Vergleich dazu führen wesentlich geringere Mengen an Zinnoctoat (Zinn-2-Ethylhexanoat oder Zinnpropylheptanoat bereits zu sehr geschlossenzelligen Schäumen, bis hin zu starkem Schrumpf (Beispiele 3 bis 5 und 8 bis 10; mm > 300).

### Bestimmung der Emissionen

Die Säure-Emission wird in Anlehnung an die Mercedes-Benz-Prüfvorschrift PB VWT 709 bestimmt.

Im Folgenden wird die Durchführung der Thermodesorption mit anschließender Gaschromatograhie/Massenspektrometrie-Kopplung (GC/MS) beschrieben.
a) Messtechnik:
Die Thermodesorption wird mit einem Thermodesorber "TDS2" mit Probenwechsler der Fa. Gerstel, Mülheim, in Verbindung mit einem Hewlett Packard HP6890/HP5973 GC/MSD-System durchgeführt.

b) Messbedingungen:

| Thermodesorption | | Gerstel TDS 2 |
|---|---|---|
| | Desorptionstemperatur | 90 °C |
| | Desorptionsdauer | 30 min |
| | Fluss | 60 ml/min |
| | Transferline | 280 °C |

| Kryofokussierung | | HP 6890 PTV |
|---|---|---|
| | Liner | Glasverdampferrohr mit silanisierter Glaswolle |
| | Temperatur | -150 °C |

| GC | | Kapillar-GC HP 6890 |
|---|---|---|
| | Injektor | PTV Split 1:50 |
| | Temperaturprogramm | -150 °C; 3 min; 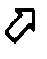 720 °C/min; 280 °C |
| | Säule | 60 m * 0,25 mm Optima 5 MS dF 0,5 µm |
| | Fluss | 1 ml/min const. flow |
| | Temperaturprogramm | 50 °C; 5 min; 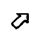 3 °C/min; 92 °C; 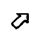 5 °C/min; 160 °C; 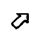 10° C/min; 280° C; 20 min |
| | Detektor | HP MSD 5973 |
| | Modus | Scan 29-350 amu 2.3 scans/sec |
| | Auswertung | Auswertung des Totalionenstrom-Chromatogramms Berechnung des 2-Ethylhexansäure-Peaks als Toluoläquivalent |

c) Kalibrierung
Zur Kalibrierung wird 1 µl eines Gemisches aus Toluol und Hexadecan in Pentan (je 0,6 mg/ml) auf ein gereinigtes, mit Tenax TA (mesh 35/60) gefülltes Adsorptionsröhrchen gegeben und vermessen (Desorption 5 min; 280 °C)
d) Probenvorbereitung
10 mg Schaumstoff werden in drei Teilproben in ein Thermodesorptionsröhrchen gesteckt. Dabei wird darauf geachtet, dass der Schaum nicht komprimiert wird.
e) Auswertung
Zur Quantifizierung der Säure-Emission wird der Peak, der mittels Massenspektrum als z.B. 2-Ethylhexansäure erkannt wird, über dessen Peakfläche mit dem Responsefaktor des Toluols aus der Kalibrierung als ppm-Toluoläquivalent bestimmt.

In Tabelle 3 sind die Ergebnisse der Säure-Emissionen ausgewählter Bespiele zusammengefasst.

**Tabelle 3: Ergebnisse der Emissionsbestimmungen**

| Nr. | erfindungsgemäß | Säure | Zinnkatalysator [Teile] | Gesamtemission [µg/g] | Säure-emission [µg/g] | Anteil an Gesamtemission [%] |
|---|---|---|---|---|---|---|
| 2 | nein | 2-Ethylhexan | 0,2 | 830 | 613 | 74 |
| 12 | ja | Isononan | 0,215 | 770 | 512 | 66 |
| 7 | nein | 2-Propylheptan | 0,23 | 1190 | 805 | 68 |
| 17^{[2]} | ja | n-Octan | 0,2 | 500 | 202 | 40 |
| 32 | ja | n-Nonan | 0,215 | 380 | 119 | 31 |

| | | | | | | |
|---|---|---|---|---|---|---|
| ^{[2]} ohne Abmischung in DPG | | | | | | |

Aus den Ergebnissen geht eindeutig hervor, dass die Emission durch Einsatz von Säuren die keine 2-Ethyl- oder 2-PropylVerzweigung aufweisen, wie z. B. Isononansäure, n-Octansäure oder n-Nonansäure deutlich verringert wird.

### Beispiel 36: Bestimmung des Einflusses des Katalysatorgehalts (zinngehalts) auf die Porosität der Schäume

Es wurden Schäume wie in Beispiel 1 bis 35 angegeben hergestellt, wobei die Konzentration an Katalysatorsystem variiert wurde. Die Schäume wurden unter Verwendung von Zinnsalzen von 2-Ethylhexansäure, 3,3-Dimethylbuttersäure, 2-Propylheptansäure, Cyclohexancarbonsäure und n-Octansäure hergestellt. Die erhaltenen Schäume wurden auf ihre Porosität hin untersucht. Die Ergebnisse dieser Untersuchungen sind in Fig. 1 dargestellt.

Es ist leicht zu erkennen, dass bei Verwendung von Katalysatorsystemen, die auf Cyclohexancarbonsäuresalz, insbesondere aber n-Octansäuresalz und Isononansäuresalz erst bei deutlich höheren Konzentrationen eine Verminderung der Porosität zu beobachten ist. Die entsprechenden Katalysatorsysteme lassen somit ein deutlich höheres Verarbeitungsspiel zu. Insbesondere bei der Verwendung von ethyl- und n-propylverzweigten Carbonsäuren führt ein geringfügig zu höheren Einsatzmengen variiertes Katalysatorsystem bereits zu sehr geschlossenen Schäumen bzw. starkem Schrumpf.

## Patentansprüche

1. Katalysatorsystem, geeignet zur Katalyse der Herstellung von Polyurethansystemen, **dadurch gekennzeichnet, dass** das Katalysatorsystem ein Zinnsalz einer Carbonsäure, an deren Carbonyl-Kohlenstoffatom ein Kohlenwasserstoffrest gebunden ist, der so ausgewählt ist, dass die Carbonsäure von 8 bis 13 Kohlenstoffatome aufweist, mit der Maßgabe, dass die Carbonsäure nicht ausschließlich eine einzelne Ethyl- oder n-Propylverzweigung in 2-Position aufweist, und dass es sich bei dem Zinnsalz um keine Organozinn verbindung handelt und der Maßgabe, dass als weitere Katalysatoren nur solche eingesetzt werden, die keine Zinnverbindungen, insbesondere kein Dibutylzinndilaurat enthalten, enthält.

2. Katalysatorsystem nach Anspruch 1, **dadurch gekennzeichnet, dass** die Zinnsalze im Katalysatorsystem ausschließlich solche von Carbonsäuren sind, deren Carboxygruppen mit einem unverzweigten Alkylrest oder einem ausschließlich Methylgruppenverzweigungen aufweisenden Alkylrest verknüpft sind.

3. Katalysatorsystem gemäß mindestens einem der Ansprüche 1 oder 2, **dadurch gekennzeichnet, dass** Zinnsalze ausgewählt sind von einem oder mehreren Salzen der 3,5,5-Trimethylhexansäure oder n-Octansäure.

4. Katalysatorsystem gemäß einem der Ansprüche 1 bis 3, **dadurch gekennzeichnet, dass** es eines oder mehrere organische Lösungsmittel enthält.

5. Katalysatorsystem gemäß einem der Ansprüche 1 bis 4, **dadurch gekennzeichnet, dass** die Carbonsäure keine einzelne Ethyl- oder n-Propylverzweigung in 2-Position aufweist.

6. Verwendung von Katalysatorsystemen gemäß einem der Ansprüche 1 bis 5 bei der Herstellung von Polyurethanbeschichtungen, Polyurethanadhäsiven, Polyurethandichtmitteln, Polyurethanelastomeren oder Polyurethanschäumen/-schaumstoffen.

7. Verwendung nach Anspruch 6, **dadurch gekennzeichnet, dass** das Katalysatorsystem der Reaktionsmischung vor oder während der Reaktion zugegeben wird.

8. Polyurethansystem, **dadurch gekennzeichnet, dass** es eine oder mehrere Zinnsalze von Carbonsäuren, an deren Carbonyl-Kohlenstoffatom ein Kohlenwasserstoffrest gebunden ist, wobei der Kohlenwasserstoffrest so ausgewählt ist, dass die Säure von 6 bis 13 Kohlenstoffatome aufweist, mit der Maßgabe, dass die Carbonsäure keine einzelne Ethyl- oder n-Propylverzweigung in 2-Stellung aufweist, aufweist.

9. Polyurethansystem gemäß Anspruch 8, **dadurch gekennzeichnet, dass** es ausschließlich solche Zinnsalze von Carbonsäuren aufweist, die unverzweigt sind oder ausschließlich Methylgruppenverzweigungen aufweisen.

10. Polyurethansystem nach Anspruch 8 oder 9, **dadurch gekennzeichnet, dass** der Massenanteil an Zinnsalzen von Carbonsäuren, an deren Carbonyl-Kohlenstoffatom ein Kohlenwasserstoffrest gebunden ist, mit der Maßgabe, dass die Carbonsäure keine einzelne Ethyl- oder n-Propylverzweigung in 2-Stellung aufweist, von 0,001 bis 2 Massen-% beträgt.

11. Polyurethansystem nach zumindest einem der Ansprüche 8 bis 10, **dadurch gekennzeichnet, dass** das Polyurethansystem eine Polyurethanbeschichtung, ein Polyurethanadhäsiv, ein Polyurethandichtmittel, ein Polyurethanelastomer, ein Polyurethanhartschaum, ein Polyurethanweichschaum, ein viskoelastischer Schaum, ein HR-Schaum, ein halbharter Polyurethanschaum, ein thermoverformbarer Polyurethanschaum oder ein Integralschaum ist.

12. Verwendung von Polyurethansystemen gemäß zumindest einem der Ansprüche 8 bis 11 als Kühlschrankisolierung, Dämmplatte, Sandwichelement, Rohrisolation, Sprühschaum, 1- & 1,5-Komponenten-Dosenschaum, Holzimitat, Modellschaum, Verpackungsschaum, Matratze, Möbelpolster, Automobil-Sitzpolster, Kopfstütze, Instrumententafel, Automobil-Innenverkleidung, Automobil-Dachhimmel, Schallabsorptionsmaterial, Lenkrad, Schuhsole, Teppichrückseitenschaum, Filterschaum, Dichtschaum, Dichtmittel und Kleber oder zur Herstellung entsprechender Produkte.

## Claims

1. Catalyst system suitable for catalyzing the production of polyurethane systems, **characterized in that** the catalyst system contains a tin salt of a carboxylic acid to whose carbonyl carbon a hydrocarbon radical is bound which is selected so that the carboxylic acid has from 8 to 13 carbon atoms, with the proviso that the carboxylic acid does not have exclusively a single ethyl or n-propyl branch in the 2 position and that the tin salt is not an organotin compound and the proviso that only catalysts which do not contain any tin compounds, in particular do not contain dibutyltin dilaurate, are used as further catalysts.

2. Catalyst system according to Claim 1, **characterized in that** the tin salts in the catalyst system are exclusively those of carboxylic acids whose carboxy groups are bound to an unbranched alkyl radical or an alkyl radical which has exclusively methyl group branches.

3. Catalyst system according to at least one of Claims 1 and 2, **characterized in that** tin salts are selected from one or more salts of 3,5,5-trimethylhexanoic acid and n-octanoic acid.

4. Catalyst system according to any of Claims 1 to 3, **characterized in that** it contains one or more organic solvents.

5. Catalyst system according to any of Claims 1 to 4, **characterized in that** the carboxylic acid does not have a single ethyl or n-propyl branch in the 2 position.

6. Use of catalyst systems according to any of Claims 1 to 5 in the production of polyurethane coatings, polyurethane adhesives, polyurethane sealants, polyurethane elastomers or polyurethane foams.

7. Use according to Claim 6, **characterized in that** the catalyst system is added to the reaction mixture before or during the reaction.

8. Polyurethane system, **characterized in that** it has one or more tin salts of carboxylic acids to whose carbonyl carbon a hydrocarbon radical is bound, where the hydrocarbon radical is selected so that the acid has from 6 to 13 carbon atoms, with the proviso that the carboxylic acid does not have a single ethyl or n-propyl branch in the 2 position.

9. Polyurethane system according to Claim 8, **characterized in that** it comprises exclusively tin salts of carboxylic acids which are unbranched or have exclusively methyl group branches.

10. Polyurethane system according to Claim 8 or 9, **characterized in that** the proportion by mass of tin salts of carboxylic acids to whose carbonyl carbon a hydrocarbon radical is bound, with the proviso that the carboxylic acid does not have a single ethyl or n-propyl branch in the 2 position, is from 0.001 to 2% by mass.

11. Polyurethane system according to at least one of Claims 8 to 10, **characterized in that** the polyurethane system is a polyurethane coating, a polyurethane adhesive, a polyurethane sealant, a polyurethane elastomer, a rigid polyurethane foam, a flexible polyurethane foam, a viscoelastic foam, an HR foam, a semirigid polyurethane foam, a thermoformable polyurethane foam or an integral foam.

12. Use of polyurethane systems according to at least one of Claims 8 to 11 as refrigerator insulation, insulation board, sandwich element, pipe insulation, spray foam, 1- & 1.5-component can foam, imitation wood, modelling foam, packaging foam, mattresses, furniture upholstery, automobile seat upholstery, headrests, dashboards, automobile interior trim, automobile roof cladding, sound absorption material, steering wheel, shoe sole, carpet backing foam, filter foam, sealing foam, sealant and adhesive or for producing corresponding products.

## Revendications

1. Système catalytique, approprié pour la catalyse de la fabrication de systèmes à base de polyuréthane, **caractérisé en ce que** le système catalytique contient un sel d'étain d'un acide carboxylique, sur l'atome de carbone de carbonyle duquel un radical hydrocarboné est relié, qui est choisi de manière à ce que l'acide carboxylique comprenne de 8 à 13 atomes de carbone, à condition que l'acide carboxylique ne comprenne pas exclusivement une ramification éthyle ou n-propyle individuelle en position 2, et que le sel d'étain ne soit pas un composé d'organoétain, et à condition que seuls des catalyseurs qui ne contiennent pas de composés d'étain, notamment pas de dilaurate de dibutylétain, soient utilisés en tant que catalyseurs supplémentaires.

2. Système catalytique selon la revendication 1, **caractérisé en ce que** les sels d'étain dans le système catalytique sont exclusivement ceux d'acides carboxyliques dont les groupes carboxy sont reliés avec un radical alkyle non ramifié ou un radical alkyle comprenant exclusivement des ramifications de groupes méthyle.

3. Système catalytique selon au moins l'une quelconque des revendications 1 ou 2, **caractérisé en ce que** les sels d'étain sont choisis parmi un ou plusieurs sels de l'acide 3,5,5-triméthylhexanoïque ou de l'acide n-octanoïque.

4. Système catalytique selon l'une quelconque des revendications 1 à 3, **caractérisé en ce qu'**il contient un ou plusieurs solvants organiques.

5. Système catalytique selon l'une quelconque des revendications 1 à 4, **caractérisé en ce que** l'acide carboxylique ne comprend pas de ramification éthyle ou n-propyle individuelle en position 2.

6. Utilisation de systèmes catalytiques selon l'une quelconque des revendications 1 à 5 lors de la fabrication de revêtements à base de polyuréthane, d'adhésifs à base de polyuréthane, d'agents d'étanchéité à base de polyuréthane, d'élastomères à base de polyuréthane ou de mousses/matériaux cellulaires à base de polyuréthane.

7. Utilisation selon la revendication 6, **caractérisée en ce que** le système catalytique est ajouté au mélange réactionnel avant ou pendant la réaction.

8. Système à base de polyuréthane, **caractérisé en ce qu'**il comprend un ou plusieurs sels d'étain d'acides carboxyliques, sur l'atome de carbone de carbonyle desquels un radical hydrocarboné est relié, le radical hydrocarboné étant choisi de manière à ce que l'acide comprenne de 6 à 13 atomes de carbone, à condition que l'acide carboxylique ne comprenne pas de ramification éthyle ou n-propyle individuelle en position 2.

9. Système à base de polyuréthane selon la revendication 8, **caractérisé en ce qu'**il comprend exclusivement des sels d'étain d'acides carboxyliques qui sont non ramifiés ou qui comprennent exclusivement des ramifications de groupes méthyle.

10. Système à base de polyuréthane selon la revendication 8 ou 9, **caractérisé en ce que** la proportion en masse de sels d'étain d'acides carboxylique sur l'atome de carbone de carbonyle desquels un radical hydrocarboné est relié, à condition que l'acide carboxylique ne comprenne pas de ramification éthyle ou n-propyle individuelle en position 2, est de 0,001 à 2 % en masse.

11. Système à base de polyuréthane selon au moins l'une quelconque des revendications 8 à 10, **caractérisé en ce que** le système à base de polyuréthane est un revêtement à base de polyuréthane, un adhésif à base de polyuréthane, un agent d'étanchéité à base de polyuréthane, un élastomère à base de polyuréthane, une mousse rigide à base de polyuréthane, une mousse souple à base de polyuréthane, une mousse viscoélastique, une mousse HR, une mousse à base de polyuréthane semirigide, une mousse à base de polyuréthane thermoformable ou une mousse intégrale.

12. Utilisation de systèmes à base de polyuréthane selon au moins l'une quelconque des revendications 8 à 11 en tant qu'isolation de réfrigérateur, plaque isolante, élément sandwich, isolation tubulaire, mousse pistolée, mousse dosée à 1 et 1,5 composant, imitation de bois, mousse de modèle, mousse d'emballage, matelas, rembourrage de meuble, rembourrage de siège automobile, appui-tête, tableau de bord, revêtement intérieur automobile, garniture de toit automobile, matériau d'absorption acoustique, volant, semelle de chaussure, mousse pour envers de tapis, mousse de filtration, mousse d'étanchéité, agent d'étanchéité et adhésif ou pour la fabrication de produits correspondants.
